# EUROPÄISCHE PATENTSCHRIFT

(11) **EP 2 427 760 B1**
(45) Veröffentlichungstag und Bekanntmachung des Hinweises auf die Patenterteilung: **30.03.2016**
(21) Anmeldenummer: 10715504.6
(22) Anmeldetag: 19.04.2010
(51) Int. Cl.: G01N 31/22, G01N 21/77, G01N 21/80, G01N 21/29

(54) **MITTEL UND VERFAHREN ZUR BESTIMMUNG DES ALDEHYD-GEHALTS**
MEANS AND METHOD FOR DETERMINING ALDEHYDE CONTENT
MOYEN ET PROCEDE POUR LA DETERMINATION DU TENEUR D'ALDEHYDE

(30) Priorität: 05.05.2009 DE 102009019902
(43) Veröffentlichungstag der Anmeldung: 14.03.2012
(73) Patentinhaber: Merck Patent GmbH, 64293 Darmstadt (DE)
(72) Erfinder: RUPPRECHT, Daniel, 64297 Darmstadt (DE); BEIL-SEIDLER, Stefanie, 64546 Moerfelden-Walldorf (DE); WAGNER, Berthold, 60489 Frankfurt am Main (DE)
(86) Internationale Anmeldenummer: PCT/EP2010/002373
(87) Internationale Veröffentlichungsnummer: WO 2010/127765

(56) Entgegenhaltungen:
- CN-A- 1 455 244
- CN-A- 101 118 220
- HANZLIK P. ET AL.: "DEGREE OF ALKALINITY NECESSARY FOR THE PHLOROGLUCIN TEST FOR FORMALDEHYDE" JOURNAL OF BIOLOGICAL CHEMISTRY, Bd. 42, Nr. 3, 1. Juli 1920 (1920-07-01), Seite 411, XP002591263

## Beschreibung

Die Erfindung betrifft ein Mittel in Form eines Teststäbchens sowie ein Verfahren zur raschen Bestimmung des Gehalts an Aldehyden.

Aldehyde stellen in der organischen Chemie wichtige Zwischenprodukte zur Herstellung von Kunststoffen dar und dienen als Desinfektions- und Konservierungsmittel. Die längerkettigen Aldehyde werden als Riechstoffe in der Parfümindustrie verwendet.

Aufgrund ihrer reduzierenden Wirkung werden Aldehyde besonders im Bereich der Desinfektion, heute vorwiegend in der Instrumenten- und Flächendesinfektion, eingesetzt. In der Instrumentendesinfektion erfüllen sie beispielsweise als einziger Wirkstoff neben Peressigsäuren die Forderung des Robert Koch-Instituts (RKI) nach Viruzidie, wenn bei der Aufbereitung keine nachgeschaltete Sterilisation erfolgt.

In der Vergangenheit hatte vor allem die gut in Wasser lösliche, gasförmige Substanz Formaldehyd große Bedeutung, weil sie über eine ausgezeichnete Wirksamkeit, auch gegenüber unbehüllten Viren verfügt. Als Anwendungsgebiete sind neben der Desinfektion insbesondere die Konservierung verschiedenster Präparate (z. B. Gewebeschnitte) und Produkte (z. B. Kosmetika) zu nennen. Da Formaldehyd heute als "krebserregend für den Menschen" eingestuft ist, nimmt dessen Anwendung in diesen Bereichen jedoch ab.

Andere Aldehyde spielen in der Konservierung und Desinfektion, insbesondere in der Kaltsterilisation, immer noch eine bedeutende Rolle. Derzeit finden insbesondere Glutardialdehyd und *ortho*-Phthaldialdehyd eine breite Anwendung.

Zum Nachweis von Aldehyden sind verschiedene Methoden bekannt. Ein Beispiel ist die Chromotropsäure-Reaktion. Häufig werden auch Aminosäuren verwendet, welche entweder direkt ein entsprechendes Farbsignal liefern (Witonsky, R. J.; Larsson, R. P.; US 4,643,980) oder welche durch die pH-Änderung nach Reaktion der Amino-Funktion zur Schiffschen Base nach Zugabe eines pH-Indikators die pH-Änderung als Farbänderung anzeigen (Wu, W. H.; US 6,436,716).

Im Bereich der klinischen Chemie wird Glutardialdehyd unter Verwendung eines Lateral-Flow Tests mit Phenol als farbgebender Substanz nachgewiesen (Smith, J.; WO 00/62060).

In Yang, S.-D.; Zhou, T.-H.; Chinese Chemical Reagents 1983; p. 237-239, wird der Nachweis von aromatischen Aldehyden mit Phloroglucin als Aldehyd-Nachweisreagenz und Zusatz einer starken Säure beschrieben.

Eine Nachweisreaktion für Aldehyde basierend auf Phloroglucin als Farbindikator ist seit langem bekannt. Schon 1920 diskutierte P. Hanzlik (J. Biol. Chem., 42 (3), 1920, s.411) den Einfluss des pH Werts auf die Nachweisreaktion von Phloroglucin mit Formaldehyd. Der Autor kam zu dem Schluss, dass hohe pH Werte (>10) für die Reaktion entscheidend sind und dass Bicarbonate, Ammoniak und Amine die Reaktion stören.

In vielen Anwendungen ist eine schnelle, quantitative Aussage über die Konzentration an Aldehyd erforderlich. Insbesondere im Bereich der Desinfektionsmittel muss schnell überprüft werden können, ob diese einen bestimmten Mindestgehalt an Aldehyd aufweisen. Nur dann ist die desinfizierende Wirkung der Mittel gewährleistet. Typischerweise beträgt der Anteil an Aldehyden in Desinfektionsmitteln einige Gewichtsprozent.

Daher ist es Aufgabe der vorliegenden Erfindung ein einfaches und schnelles Verfahren zur Bestimmung des Aldehydgehaltes in Lösungen, beispielsweise Desinfektionsmittel, zur Verfügung zu stellen. Das Verfahren sollte schnell in der Ausführung, kostengünstig und in Form eines gebrauchsfertigen Testsatzes gut lagerfähig sein. Insbesondere sollte das erfindungsgemäße Verfahren nicht nur einer halbquantitativen, visuellen, sondern auch einer quantitativen Auswertung z.B. mit einem Reflektometer zugänglich sein.

Es wurde gefunden, dass aromatische und nicht-aromatische Aldehyde einfach und schnell mit Phloroglucin als Nachweisreagenz nachgewiesen werden können. Im Gegensatz zu dem bekannten Verfahren zum Nachweis von aromatischen Aldehyden mit Phloroglucin in saurer Lösung erfolgt der erfindungsgemäße Nachweis mithilfe eines Teststäbchens, auf den Phloroglucin in basischem Medium aufgebracht ist. Es wurde weiter gefunden, dass durch Zusatz einer bestimmten Menge eines oder mehrerer primärer oder sekundärer Amine eine genaue Einstellung des Meßbereichs vorgenommen werden kann. Auf diese Weise wird der quantitative Nachweis von Aldehyden über einen breiten Konzentrationsbereich möglich.

Gegenstand der vorliegenden Erfindung ist daher ein Teststäbchen, das zumindest eine Zone aufweist, die zumindest Phloroglucin und eine Base enthält.

In einer bevorzugten Ausführungsform enthält die Zone des Teststäbchens neben Phloroglucin und einer Base zusätzlich zumindest ein primäres oder sekundäres Amin.

In einer bevorzugten Ausführungsform handelt es sich bei der Base um Natriumhydroxid.

In einer bevorzugten Ausführungsform handelt es sich bei dem primären Amin um Tris(hydroxymethyl)aminomethan.

In einer bevorzugten Ausführungsform erfolgt die Herstellung des Teststäbchens durch Tränken der Zone mit einer Tränklösung, die Phloroglucin in einer Konzentration zwischen 0,5 und 500 g/l enthält und einen ph-Wert von mindestens pH 10 hat.

In einer Ausführungsform weist das Teststäbchen mindestens zwei Zonen auf, die Phloroglucin und eine Base sowie unterschiedliche Mengen eines primären oder sekundären Amins enthalten.

In einer besonders bevorzugten Ausführungsform erfolgt die Herstellung des Teststäbchens durch Tränken der Zone oder der Zonen mit einer Tränklösung, die Phloroglucin in einer Konzentration zwischen 0,5 und 500 g/l enthält und NaOH in einer Konzentration zwischen 0,5 und 5 mol/l enthält.

Gegenstand der vorliegenden Erfindung ist auch ein Teststäbchen, das zumindest eine Zone aufweist, die zumindest Phloroglucin und eine Base enthält, herstellbar durch
a) Bereitstellen eines Trägers oder eines Teststäbchens zumindest bestehend aus einem stabilen Grundträger und einem saugfähigen Träger
b) Tränken des saugfähigen Trägers mit einer Lösung, die zumindest Phloroglucin und eine Base enthält
c) Aufbringen des saugfähigen Trägers auf einen Grundträger, falls der saugfähige Träger noch nicht auf einen Grundträger aufgebracht ist.

Gegenstand der vorliegenden Erfindung ist auch ein Verfahren zum Nachweis von Aldehyden, gekennzeichnet durch zumindest folgende Verfahrensschritte:
a) Bereitstellen eines erfindungsgemäßen Teststäbchens
b) Eintauchen des Teststäbchens in die Probenlösung
c) Visuelle und/oder spektroskopische, bevorzugt reflektometrische, Auswertung der Färbung des Testreifens

In einer bevorzugten Ausführungsform erfolgt die Auswertung in Schritt c) reflektometrisch anhand einer vorher erstellten Eichkurve.

Gegenstand der vorliegenden Erfindung ist auch die Verwendung des erfindungsgemäßen Teststäbchens zum Nachweis von Aldehyden in wässrigen Lösungen, wie insbesondere Desinfektionsmitteln.

Abbildung 1 zeigt die Auswertung einer quantitativen reflektometrischen Bestimmung von Formaldehyd, Acetaldehyd, Glutardialdehyd bzw. Glyoxal in wässriger Lösung. Nähere Angaben finden sich in Beispiel 2.

Abbildung 2 zeigt die Auswertung einer quantitativen reflektometrischen Bestimmung von Glutardialdehyd unter Einstellung der Empfindlichkeit durch Zusatz von Tris(hydroxymethyl)aminomethan. Nähere Angaben finden sich in Beispiel 3.

Aldehyde sind chemische Verbindungen, die als funktionelle Gruppe eine Aldehydgruppe enthalten. Die Begriffe Aldehyd und Aldehydgruppe sind dem Fachmann bekannt. Beispiele für Aldehyde, die mit dem erfindungsgemäßen Mittel und Verfahren nachgewiesen werden können sind Formaldehyd, Acetaldehyd, Glutardialdehyd, *ortho*-Phthaldialdehyd, Glyoxal (Ethan-1,2-dial) und Succinaldehyd (Butandial), bevorzugt Glutardialdehyd.

Primäre oder sekundäre Amine sind dem Fachmann bekannt. Erfindungsgemäß geeignete Amine sind z.B. Histidin, Arginin oder Ethanolamin. Besonders bevorzugt wird als Amin erfindungsgemäß Tris(hydroxymethyl)aminomethan eingesetzt.

Eine Probenlösung ist erfindungsgemäß jede Lösung, in der Aldehyde vermutet werden bzw. deren Aldehyd-Gehalt bestimmt werden soll. Typischerweise handelt es sich um vorwiegend wässrige Lösungen. Besonders geeignet ist das erfindungsgemäße Verfahren zur Bestimmung des Aldehyd-Gehaltes in Desinfektionsmitteln. Die Desinfektionsmittel können mit Wasser definiert verdünnt oder bevorzugt direkt als Probenlösung eingesetzt werden. Mit dem erfindungsgemäßen Mittel und Verfahren kann auch der Aldehyd-Gehalt von Polymerisationslösungen bestimmt werden, bei denen über den Aldehyd-Gehalt auf den Rest-Monomergehalt geschlossen werden kann.

In jüngerer Zeit hat die Analyse mit festen, saugfähigen Trägern, den sogenannten Teststäbchen, zunehmend an Bedeutung gewonnen. Zu den wesentlichen Vorteilen dieser trockenchemischen Verfahren gehören insbesondere die einfache Handhabung sowie die aufgrund der geringen Reagenzmengen unproblematische Entsorgung. Alle oder der größte Teil der für die Nachweisreaktion notwendigen Reagenzien sind dabei in entsprechenden Schichten eines festen, saugfähigen oder quellbaren Trägers (im weiteren saugfähiger Träger genannt) eingebettet, auf den die Probe aufgebracht wird. Dabei besteht typischerweise nicht das ganze Teststäbchen aus dem saugfähigen Träger. Vielmehr besteht das Teststäbchen bevorzugt aus einem stabilen Grundträger, z.B. aus Kunststoff, der teilweise mit einem saugfähigen Träger bedeckt ist. Dieser von dem saugfähigen Träger bedeckte Teil des Teststäbchens wird auch Zone genannt. Nach Kontakt der Zone, die die entsprechenden Nachweis-Reagenzien enthält, mit der Probe läuft die Nachweisreaktion ab. Die gebildete Farbe ist ein Maß für die Menge des zu bestimmenden Analyts und kann visuell, d. h. halbquantitativ bzw. quantitativ mit einfachen Reflektometern ausgewertet werden.

Als saugfähige Träger können alle Materialien verwendet werden, die üblicherweise für solche Tests im Gebrauch sind. Am weitesten verbreitet ist die Verwendung von Filterpapier, jedoch können auch andere saugfähige Cellulose- oder Kunststoffprodukte eingesetzt werden. Die saugfähigen Träger werden in bekannter Weise mit Tränklösungen imprägniert, die alle zur Bestimmung notwendigen Reagenzien enthalten. Die getränkten und getrockneten Papiere können geeignet zugeschnitten und in bekannter Weise auf die stabilen Grundträger, z.B. Trägerfolien, aufgeklebt bzw. aufgesiegelt werden. Genauso kann der saugfähige Träger zunächst in bekannter Weise auf den stabilen Grundträger, z.B. Trägerfolien, aufgeklebt bzw. aufgesiegelt werden, und anschließend die Tränklösung auf den saugfähigen Träger aufgetropft werden. Die getränkten und getrockneten Produkte können dann geeignet zugeschnitten werden.

Das hier beschriebene Nachweissystem verwendet Phloroglucin als Chromophor bzw. Nachweisreagenz und eine starke Base, um den für die Nachweisreaktion erforderlichen pH-Wert zu erzeugen. In einer bevorzugten Ausführungsform enthält das Nachweissystem auch noch mindestens ein primäres oder sekundäres Amin als Inhibitor zur Einstellung des gewünschten Messbereiches. Das Nachweissystem liegt in Form einer imprägnierten Matrix vor, d. h. alle für den Nachweis der Aldehyde notwendigen Reagenzien sind in einen saugfähigen Träger eingebettet. Die resultierende Farbreaktion wird z.B. reflektometrisch oder visuell durch Vergleich mit einer Farbkarte ausgewertet.

Typischerweise werden die erfindungsgemäßen Teststäbchen hergestellt, indem zunächst ein saugfähiger Träger mit einer Tränklösung imprägniert wird. Die Tränklösung enthält zumindest Phloroglucin und eine Base. Bevorzugt handelt es sich bei der Tränklösung um eine wässrige Lösung. Die Tränklösung kann jedoch als Lösungsmittel statt Wasser auch ein oder mehrere organische Lösungsmittel oder eine Mischung aus Wasser mit ein oder mehreren mit Wasser mischbaren organischen Lösungsmitteln enthalten.

Die Konzentration von Phloroglucin in der Tränklösung beträgt typischerweise zwischen 0,5 und 500 g Phloroglucin pro Liter Tränklösung. Bevorzugt liegt die Konzentration zwischen 10 und 80 g Phloroglucin pro Liter Tränklösung.

Bevorzugt wird die Tränklösung derart auf den Teststreifen aufgetragen, dass sich in einer Reaktions-Zone (6x6 mm) ca. 0,05 bis 0,5 mg, bevorzugt zwischen 0,1 und 0,2 mg Phloroglucin befinden.

Als Base eignet sich erfindungsgemäß jede Base, die einen pH-Wert größer oder gleich pH 10, bevorzugt größer oder gleich pH 13, in der Tränklösung erzeugen kann. Erfindungsgemäß geeignete Basen sind organische Basen oder anorganische Basen, wie KOH oder NaOH. Besonders bevorzugt enthält die Tränklösung 1 bis 5 mol/l NaOH.

Zusätzlich können der Tränklösung optional weitere Stoffe wie Stabilisatoren oder ähnliches zugesetzt werden.

Es wurde gefunden, dass ein quantitativer Nachweis in einem gewünschten Konzentrationsbereich erreicht werden kann, wenn neben dem Chromophor Phloroglucin ein Inhibitor eingesetzt wird. Dieser Inhibitor hemmt die Ausbildung des Farbsignals.

Es wurde gefunden, dass für den erfindungsgemäßen Nachweis ein oder mehrere primäre oder sekundäre Amine als Inhibitor eingesetzt werden können. Besonders bevorzugt wird Tris(hydroxymethyl)aminomethan verwendet.

Der Inhibitor kann der Probelösung vor der Messung zugesetzt werden oder bevorzugt der Tränklösung bei der Teststäbchenherstellung in einer bestimmten Konzentration zugesetzt werden, so dass aus der bekannten Inhibitor-Konzentration berechnet werden kann, wie viel Aldehyd aufgrund des Inhibitors nicht an der Aldehyd-Bestimmung mittels der Farbreaktion mit Phloroglucin teilnimmt. Auf diese Weise kann man durch Zusatz einer geeigneten Inhibitormenge eine Messung in jedem gewünschten Aldehyd-Konzentrationsbereich vornehmen, ohne zuvor die Probenlösung verdünnen zu müssen. Man erhält im gewünschten Konzentrationsbereich ein Farbsignal proportional zur Gesamt-Aldehyd-Konzentration. Dies ist in Beispiel 3 gezeigt.

In einer Ausführungsform besitzt das erfindungsgemäße Teststäbchen statt einer Nachweis- bzw. Reaktionszone zwei oder mehrere Zonen. Diese Zonen unterscheiden sich in der Menge an Inhibitor. Beispielsweise enthält eine Zone keinen Inhibitor, eine zweite Zone 1 Gew% Inhibitor (1 Gew% bezogen auf Anteil in der Tränklösung), eine dritte Zone 2 Gew% Inhibitor. Auf diese Weise können mit einem Teststäbchen drei Messungen in unterschiedlichen Aldehyd-Konzentrationsbereichen durchgeführt werden. Teststäbchen mit zwei oder mehreren Zonen eignen sich insbesondere für Aldehyd-Bestimmungen in Probelösungen deren Aldehyd-Gehalt völlig unbekannt ist.

Gegenstand der vorliegenden Erfindung ist auch ein Verfahren zur Bestimmung des Aldehyd-Gehaltes von Probenlösungen, gekennzeichnet durch die folgenden Verfahrensschritte
a) Bereitstellen einer Probenlösung und eines erfindungsgemäßen Teststäbchens
b) Kurzes Eintauchen des Teststäbchens in die Probe
c) Visuelle und/oder spektroskopische, bevorzugt reflektometrische, Auswertung der Färbung des Teststäbchens

Die erfindungsgemäßen Teststäbchen werden typischerweise nur sehr kurz, d.h. eine oder wenige Sekunden, in die Probenlösung getaucht. Ein einmaliges Benetzen des Teststäbchens ist ausreichend. Die Auswertung kann typischerweise bereits nach 20 bis 120 Sekunden erfolgen. Um vergleichbare bzw. reproduzierbare Messergebnisse zu erhalten, sollte die Auswertung des Teststäbchens immer nach einer definierten Zeit, z.B. nach 20, 60, 90 oder 120 Sekunden, erfolgen. Zur Auswertung kann die auftretende Gelb/Orange-Färbung z.B. mit einer Farbkarte verglichen werden oder reflektometrisch beispielsweise mit einem Hand-Refektometer (z.B. RQFlex ®, Merck KGaA, Deutschland) ausgewertet werden.

Der Messbereich des erfindungsgemäßen Mittels und Verfahrens liegt ohne Zusatz von Inhibitor typischerweise zwischen 0,2 und 4 Gew% Aldehyd in der Probenlösung. Der Messbereich kann je nach Aldehyd, z.B. in Abhängigkeit von der Molmasse und der Reaktivität des Aldehyds, leicht variieren. Durch den Zusatz von Inhibitor kann der Messbereich in der Regel bis hin zu 4-fach höheren Aldehyd-Konzentrationen verschoben werden.

Somit konnte ein einfaches, schnelles und zuverlässiges Mittel und Verfahren zur Bestimmung des Gehaltes an Aldehyden zur Verfügung gestellt werden, das auch z.B. von Reinigungspersonal vor Ort zur Überprüfung der Desinfektionsmittel durchgeführt werden kann. Zu den wesentlichen Vorteilen des erfindungsgemäßen trockenchemischen Verfahrens gehört neben der einfachen Handhabung auch die aufgrund der geringen Reagenzmengen unproblematische Entsorgung.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, insbesondere der korrespondierenden Anmeldung DE 102009019902, eingereicht am 05.05.2009, ist durch Bezugnahme in diese Anmeldung eingeführt.

### Beispiele

### Beispiel 1: Bestimmung von Acetaldehyd in wässriger Lösung mittels visueller Auswertung (Farbvergleich):

### Herstellung der Tränklösung:

10,0 g Phloroglucin wird in 250 mL 2 N wässriger Natriumhydroxid-Lösung aufgelöst.

### Erstellung der Teststäbchen:

Ein ca. 6 mm breiter Streifen Filterpapier (z. B. Fa. Hollingsworth & Vose, Typ "Binzer 1588") wird mit Schmelzkleber (z. B. Kleber Dynapol S 1272) auf eine weiße Trägerfolie aufgesiegelt. Auf die Papierzone dieses Streifens wird die o. g. Tränklösung in einer Menge von ca. 2 mL pro Meter des 6 mm breiten Filterpapier aufgetropft und umgehend getrocknet. Diese Folie wird nun alle 6 mm quer geschnitten, so dass eine Reaktionszone aus getränktem Papier mit den ungefähren Abmessungen 6 mm x 6 mm resultiert.

### Analyse:

Die auf diese Weise hergestellten Teststäbchen werden für 1 sec in die zu untersuchende Lösung eingetaucht, abgeschüttelt und nach genau 60 sec beurteilt. Im vorliegenden Beispiel werden die Stäbchen in Lösungen von Acetaldehyd (0 bis 2,5 Gew.-%) in Wasser eingetaucht. In Abhängigkeit von der Acetaldehydkonzentration bildet sich auf der Reaktionszone eine orange-gelbe Farbe, durch Vergleich mit einer Farbskala ist damit eine halbquantitative Bestimmung möglich.

### Beispiel 2: Bestimmung von Formaldehyd, Acetaldehyd, Glutardialdehyd bzw. Glyoxal in wässriger Lösung mittels quantitativer Auswertung (reflektometrisch):

### Herstellung der Tränklösung und der Teststäbchen:

### wie in Beispiel 1

### Analyse:

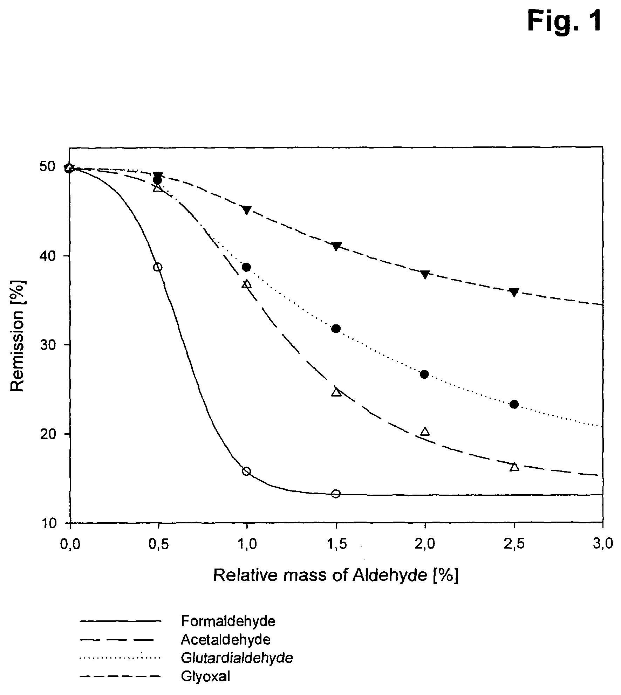

Die Teststäbchen werden für 1 sec in die zu untersuchende Lösung eingetaucht, abgeschüttelt und nach genau 60 sec bei λ ≈ 576 nm mit einem Reflektometer RQflex® vermessen. Abbildung 1 zeigt die reflektometrische Auswertung der Stäbchen nach Eintauchen für 1 sec in die Probenlösung und 60 sec der Farbentwicklung.

### Beispiel 3: Einstellung der Empfindlichkeit der Glutardialdehyd-Bestimmung unter Verwendung von Tris(hydroxymethyl)aminomethan (reflektometrisch dokumentiert):

### Herstellung der Tränklösung:

10,0 g Phloroglucin wird in 250 mL 2 N wässriger Natriumhydroxid-Lösung aufgelöst. Dieser Lösung werden nun unterschiedliche Mengen Tris(hydroxymethyl)aminomethan (CAS-Nr. 77-86-1) zugesetzt:
(a) kein weiterer Zusatz: c(Amin) ≈ 0 %
(b) 2,5 g pro 280 g der o. g. Lösung: c(Amin) ≈ 1 %
(c) 5,0 g pro 280 g der o. g. Lösung: c(Amin) ≈ 2 %
(d) 10,0 g pro 280 g der o. g. Lösung: c(Amin) ≈ 4 %.

### Analyse:

Die Teststäbchen werden für 1 sec in die zu untersuchende Lösung eingetaucht, abgeschüttelt und nach genau 60 sec bei λ ≈ 576 nm mit einem Reflektometer RQflex® vermessen.

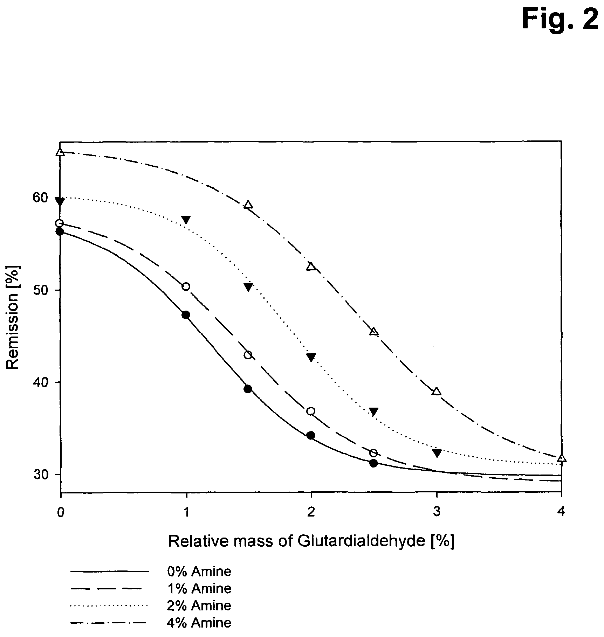

Abbildung 2 zeigt die reflektometrische Auswertung der Stäbchen nach Eintauchen für 1 sec in die Probenlösung und 60 sec der Farbentwicklung. Die Verschiebung des Messbereiches zu höheren Konzentrationen ist deutlich zu erkennen.

## Patentansprüche

1. Teststäbchen, das zumindest eine Zone aufweist, die zumindest Phloroglucin, eine Base und ein primäres oder sekundäres Amin enthält.

2. Teststäbchen nach Anspruch 1, **dadurch gekennzeichnet, dass** es sich bei der Base um Natriumhydroxid handelt.

3. Teststäbchen nach Anspruch 1 oder 2, **dadurch gekennzeichnet, dass** es sich bei dem primären oder sekundären Amin um Tris(hydroxymethyl)aminomethan handelt.

4. Teststäbchen nach einem oder mehreren der Ansprüche 1 bis 3, **dadurch gekennzeichnet, dass** das Teststäbchen mindestens zwei Zonen aufweist, die Phloroglucin und eine Base sowie unterschiedliche Mengen eines primären oder sekundären Amins enthalten.

5. Verfahren zum Nachweis von Aldehyden, **gekennzeichnet durch** zumindest folgende Verfahrensschritte:
a) Bereitstellen eines Teststäbchens nach einem der Ansprüche 1 bis 4
b) Eintauchen des Teststäbchens in die Probenlösung
c) Auswertung der Färbung des Testreifens

6. Verfahren nach Anspruch 5, **dadurch gekennzeichnet, dass** die Auswertung in Schritt c) reflektometrisch erfolgt.

7. Verwendung eines Teststäbchens nach einem oder mehreren der Ansprüche 1 bis 4 zum Nachweis von Aldehyden in wässrigen Lösungen, wie insbesondere Desinfektionsmitteln.

## Claims

1. Test stick which has at least one zone which comprises at least phloroglucine, a base and a primary or secondary amine.

2. Test stick according to Claim 1, **characterised in that** the base is sodium hydroxide.

3. Test stick according to Claim 1 or 2, **characterised in that** the primary or secondary amine is tris(hydroxymethyl)aminomethane.

4. Test stick according to one or more of Claims 1 to 3, **characterised in that** the test stick has at least two zones which comprise phloroglucine and a base as well as different amounts of a primary or secondary amine.

5. Method for the determination of aldehydes, **characterised by** at least the following method steps:
a) provision of a test stick according to one of Claims 1 to 4
b) dipping of the test stick into the sample solution
c) evaluation of the coloration of the test strip

6. Method according to Claim 5, **characterised in that** the evaluation in step c) is carried out reflectometrically.

7. Use of a test stick according to one or more of Claims 1 to 4 for the determination of aldehydes in aqueous solutions, such as, in particular, disinfectants.

## Revendications

1. Bandelette réactive ayant au moins une zone comprenant au moins de la phloroglucine, une base et une amine primaire ou secondaire.

2. Bandelette réactive selon la revendication 1, **caractérisée en ce que** la base est l'hydroxyde de sodium.

3. Bandelette réactive selon la revendication 1 ou 2, **caractérisée en ce que** l'amine primaire ou secondaire est le tris(hydroxyméthyl)aminométhane.

4. Bandelette réactive selon l'une ou plusieurs parmi les revendications 1 à 3, **caractérisée en ce que** la bandelette réactive possède au moins deux zones comprenant de la phloroglucine et une base ainsi que différentes quantités d'une amine primaire ou secondaire.

5. Méthode de détermination d'aldéhydes, **caractérisée par** au moins les étapes de méthode suivantes, consistant à :
a) fournir une bandelette réactive selon l'une des revendications 1 à 4 ;
b) tremper la bandelette réactive dans la solution d'échantillon ;
c) évaluer la coloration de la bandelette réactive.

6. Méthode selon la revendication 5, **caractérisée en ce que** l'évaluation dans l'étape c) est effectuée par voie réflectométrique.

7. Utilisation d'une bandelette réactive selon l'une ou plusieurs parmi les revendications 1 à 4, pour la détermination d'aldéhydes dans des solutions aqueuses, telles qu'en particulier des désinfectants.
